# FASCICULE DE BREVET EUROPEEN

(11) **EP 0 960 698 B1**
(45) Date de publication et mention de la délivrance du brevet: **22.09.2004**
(21) Numéro de dépôt: 99400955.3
(22) Date de dépôt: 20.04.1999
(51) Int. Cl.: B25J 21/02, G21F 7/005

(54) **Dispositif de transfert étanche à décontamination integrée par rayonnements ultraviolets**
Abgedichtete Transportvorrichtung mit integrietrer Ultraviolettdekontaminationseinrichtung
Sealed transfer device with an integrated UV decontamination device

(30) Priorité: 23.04.1998 FR 9805095
(43) Date de publication de la demande: 01.12.1999
(73) Titulaire: La Calhene, 78142 Vélizy Cedex (FR)
(72) Inventeur: Riviere, Jean-Michel, 41000 Blois (FR); Senges, Patrick, 75016 Paris (FR)
(74) Mandataire: Poulin, Gérard

(56) Documents cités:
- EP-A- 0 662 373
- FR-A- 2 700 882
- GB-A- 2 165 155

## Description

### Domaine technique

L'invention concerne un dispositif de transfert étanche, du type à double porte, conçu pour permettre la mise en communication provisoire ou permanente de deux volumes stériles, sans risquer de contaminer ces volumes.

Un dispositif ainsi conçu trouve son application dans tous les domaines qui requièrent la présence d'une atmosphère stérile. Parmi ces domaines, on citera de façon nullement limitative les industries pharmaceutique et chimique, le secteur médical, etc..

### Etat de la technique

Dans tous les cas où l'on désire préserver une atmosphère stérile, il est d'usage d'utiliser un isolateur de confinement étanche délimitant intérieurement un volume stérile. Un stérilisateur associé à l'isolateur permet d'établir et, le cas échéant, de renouveler le caractère stérile de l'atmosphère qu'il contient.

Pour permettre l'exécution d'un certain nombre de tâches à l'intérieur d'un tel isolateur, et aussi pour y introduire et pour en extraire des produits et des matériels, on utilise habituellement des dispositifs de transfert ou de raccordement étanches, à double porte. Ces dispositifs, sont appelés communément "DPTE" (Double Porte de Transfert Etanche) ou "RTP" (de l'anglais "Resin Transfert Port").

Un dispositif DPTE ou RTP comprend traditionnellement deux brides aptes à être connectées l'une à l'autre, ainsi que deux portes obturant normalement les ouvertures délimitées par les brides. Les brides sont montées sur les parois des deux ensembles que l'on désire raccorder (isolateur et conteneur rigide, isolateur et conteneur souple, isolateur et isolateur, isolateur et gant, etc.).

Pour assurer le raccordement des deux ensembles, on connecte les brides l'une à l'autre, puis on connecte les portes l'une à l'autre tout en les déconnectant des brides correspondantes. L'enlèvement de la double porte ainsi formée assure la mise en communication des volumes internes aux deux ensembles.

Si l'un quelconque des volumes que l'on désire mettre en communication n'est pas initialement stérile, ce volume est stérilisé au moyen d'un stérilisateur prévu à cet effet, avant l'ouverture de la double porte.

Les dispositifs DPTE ou RTP existants sont conçus afin d'éviter qu'aucune des surfaces qui sont en contact avec l'atmosphère extérieure non stérile, avant le raccordement des deux ensembles, ne soit en contact avec le volume interne stérile commun aux deux ensembles, après ouverture de la double porte. Dans la pratique, ce résultat est obtenu au moyen de deux joints d'étanchéité annulaires, qui sont montés respectivement sur l'une des brides et sur la porte qui obture l'autre bride. Chacun de ces joints présente en section une partie en forme de V et les pointes de ces deux parties se font approximativement face lorsque leur raccordement a été effectué et que les portes sont encore en place.

Cet agencement classique satisfait de façon générale au but recherché. Toutefois, on a observé que des germes peuvent parfois se déposer sur les pointes des parties en forme de V des deux joints et à proximité immédiate de celles-ci, avant le raccordement des deux ensembles. Or, ces pointes et les parties immédiatement adjacentes des joints sont mises en contact avec le volume stérile commun aux deux ensembles, après le raccordement et l'ouverture de la double porte.

Une solution à ce problème a été proposée dans le document EP-A-0 662 373. Selon ce document, une résistance chauffante est intégrée dans la bride dépourvue de joint d'étanchéité, de façon à être en contact avec les joints, à proximité de leurs pointes, lorsque le raccordement est réalisé et avant l'ouverture de la double porte. A ce stade, une mise en oeuvre de l'élément chauffant permet de stériliser les régions des joints éventuellement contaminées.

Toutefois, cette solution connue n'est pas réellement satisfaisante. En effet, l'efficacité de la décontamination obtenue à l'aide d'un tel élément chauffant reste aléatoire. De plus, l'obtention éventuelle d'une décontamination satisfaisante suppose un temps de chauffage relativement long, qui pénalise grandement la mise en oeuvre du dispositif.

D'autre part, le document GB-A-2 165 155 enseigne d'utiliser une lampe ultraviolet pour établir une atmosphère stérile à l'intérieur d'un boîtier destiné au remplacement du sac contenant le fluide de dialyse dans une installation de dialyse ambulatoire.

### Exposé de l'invention

L'invention a précisément pour objet un dispositif de transfert étanche, de type DPTE, RTP ou autre, dont la conception originale lui permet de décontaminer de façon sûre et rapide les pointes en vis-à-vis des joints d'étanchéité et les parties immédiatement adjacentes, après le raccordement des deux ensembles et avant l'ouverture de la double porte.

Conformément à l'invention, ce résultat est obtenu au moyen d'un dispositif de transfert étanche entre deux volumes stériles, incluant deux brides aptes à être connectées l'une à l'autre, deux portes aptes à être connectées l'une à l'autre ainsi qu'auxdites brides, et deux joints d'étanchéité annulaires montés respectivement sur une première des brides et sur la porte apte à être connectée à la deuxième bride, lesdits joints présentant en section des parties en forme de V dont les pointes se font face lorsque les portes et les brides sont connectées les unes aux autres, dans lequel les moyens de décontamination des pointes des parties en forme de V des joints et des régions immédiatement adjacentes, sont intégrés dans la deuxième bride, caractérisé par le fait que les moyens de décontamination, utilisent des rayonnements ultraviolets, ultraviolets pulsés ou de lumière pulsés, les moyens de décontamination comprenant une bague en un matériau apte à diffuser les rayonnements, ladite bague présentant en section une partie en forme de V apte à être en contact avec les parties en forme de V des joints, et des fibres optiques dont des premières extrémités sont régulièrement réparties autour de ladite bague et tournées vers la pointe de la partie en forme de V de celle-ci.

Les deuxièmes extrémités des fibres optiques sont alors reliées à une source de rayonnements.

De préférence, les fibres optiques sont regroupées à l'extérieur de la bague en au moins un câble. Ainsi, selon un agencement préféré, bien que non limitatif, les fibres optiques sont regroupées en deux câbles qui pénètrent dans la deuxième bride en des emplacements diamétralement opposés.

Pour faciliter le montage, la deuxième bride comprend avantageusement deux pièces reliées l'une à l'autre par des moyens d'assemblage et entre lesquelles est montée la bague précitée. Le câble chemine alors dans un passage formé dans une première des deux pièces, tournée vers l'extérieur du volume stérile correspondant, des moyens d'étanchéité étant prévus entre les deux pièces, à l'opposé de la bague par rapport au passage précité.

Dans la forme de réalisation préférée de l'invention, les premières extrémités des fibres optiques sont logées dans des trous borgnes formés dans la bague, ces trous étant situés dans des plans régulièrement espacés passant par l'axe de la bague et sur une surface tronconique, bissectrice de la partie en forme de V de la bague.

Les premières extrémités des fibres optiques sont séparées les unes des autres d'une distance telle que la pointe de la partie en forme de V de la bague est apte à être balayée, sur toute la circonférence de celle-ci, par les rayonnements.

### Brève description des dessins

On décrira à présent, à titre d'exemple non limitatif une forme de réalisation préférée de l'invention, en se référant aux dessins annexés, dans lesquels:
- la figure 1 est une vue de côté, en coupe, représentant un dispositif de transfert étanche conforme à l'invention, dans son état connecté et avant l'ouverture de la double porte ;
- la figure 2 est une vue en coupe comparable à la figure 1, illustrant à plus grande échelle l'implantation des moyens de décontamination ; et
- la figure 3 est une vue de face, illustrant schématiquement l'implantation des fibres optiques dans le dispositif de la figure 1.

### Description détaillée d'une forme de réalisation préférée de l'invention

Sur les figures, la référence 10 désigne de façon générale un dispositif de transfert étanche conforme à l'invention. Ce dispositif, de type DPTE, permet de mettre en communication deux volumes stériles 12 et 14, en évitant tout risque de contamination de ces volumes par l'atmosphère extérieure.

Dans l'exemple représenté, le volume stérile 12 est le volume interne d'un isolateur dont une petite partie de la paroi est illustrée en 16. Par ailleurs, le volume stérile 14 est le volume intérieur d'un conteneur à paroi rigide, dont une petite partie de la paroi est illustrée en 18.

Cet exemple ne doit toutefois pas être considéré comme limitatif. En effet, le volume stérile 14 peut aussi être délimité à l'intérieur d'un conteneur à paroi souple, à l'intérieur d'un autre isolateur, à l'intérieur d'un gant de manipulation, ou à l'intérieur de tout autre ensemble amovible susceptible d'être raccordé sur l'enceinte délimitant le volume stérile 12, sans sortir du cadre de l'invention.

Le dispositif de transfert étanche 10 comprend, de façon connue, une première bride 20 fixée à la paroi 16, ainsi qu'une première porte 22 obturant normalement une ouverture circulaire délimitée par la bride 20.

Le dispositif de transfert étanche 10 comprend par ailleurs une deuxième bride 24, fixée à la cloison 18, ainsi qu'une deuxième porte 26, qui obture normalement de façon étanche une ouverture circulaire délimitée par la bride 24.

La première porte 22 coopère avec la première bride 20 par un mécanisme, par exemple du type à baïonnette, qui évite toute ouverture intempestive de la porte 22 en l'absence d'une manoeuvre délibérée de celle-ci.

De façon comparable, la deuxième porte 26 coopère avec la deuxième bride 24 par l'intermédiaire d'un mécanisme, par exemple du type à baïonnette, qui évite l'ouverture intempestive de la porte 26 en l'absence d'une manoeuvre délibérée de celle-ci.

Selon des caractéristiques connues des spécialistes, les brides 20 et 24 sont aptes à coopérer l'une avec l'autre par l'intermédiaire d'un mécanisme, par exemple du type à baïonnette, au moyen duquel les deux brides peuvent être connectées et déconnectées à volonté.

De façon comparable, un mécanisme, par exemple du type à baïonnette, est également prévu entre les deux portes 22 et 26, afin que celles-ci puissent être automatiquement connectées l'une à l'autre lorsqu'elles sont déconnectées de leurs brides respectives 20 et 24, et inversement.

Ces différents mécanismes sont bien connus et peuvent prendre différentes formes, sans sortir du cadre de l'invention. Ils ne font pas partie de l'invention et aucune description détaillée n'en sera faite.

Toujours de façon connue, des systèmes de sécurité sont généralement intégrés au dispositif de transfert étanche 10, afin d'éviter des fausses manoeuvres risquant d'entraîner une mise en communication des volumes stériles 12 et 14 avec l'atmosphère extérieur. Ces systèmes de sécurité ne font pas partie de l'invention et ils ne seront donc pas décrits en détail.

De façon classique, la mise en communication des volumes stériles 12 et 14 est assurée en connectant tout d'abord les brides 20 et 24 l'une à l'autre à l'aide du mécanisme prévu à cet effet. Ensuite, les portes 22 et 26 sont à leur tour connectées l'une à l'autre, tout en étant déconnectées de leurs brides respectives 20 et 24. l'ouverture de la double porte ainsi formée assure la mise en communication des volumes 12 et 14.

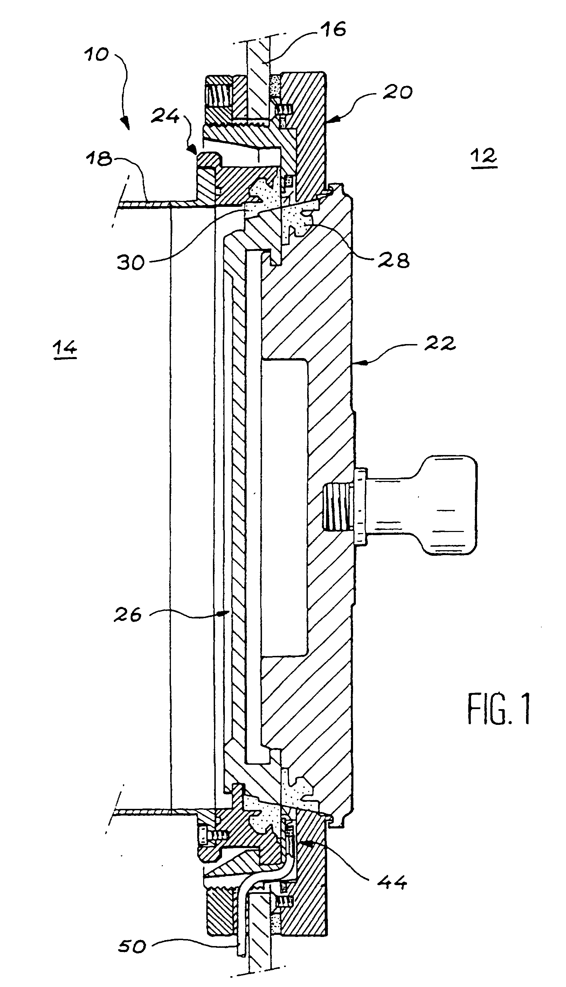

Toujours selon la technique connue, le dispositif de transfert étanche 10 illustré sur la figure 1 comprend de plus deux joints d'étanchéité annulaires 28 et 30, agencés de façon à préserver le confinement des volumes stériles 12 et 14 à tous les stades de mise en oeuvre du dispositif. Ces joints d'étanchéité annulaires 28 et 30 sont conçus pour éviter que les surfaces qui se trouvent en contact avec l'atmosphère extérieure, lorsque les brides 20 et 24 ne sont pas accouplées, contaminent les volumes stériles 12 et 14 lors de leur mise en communication ultérieure.

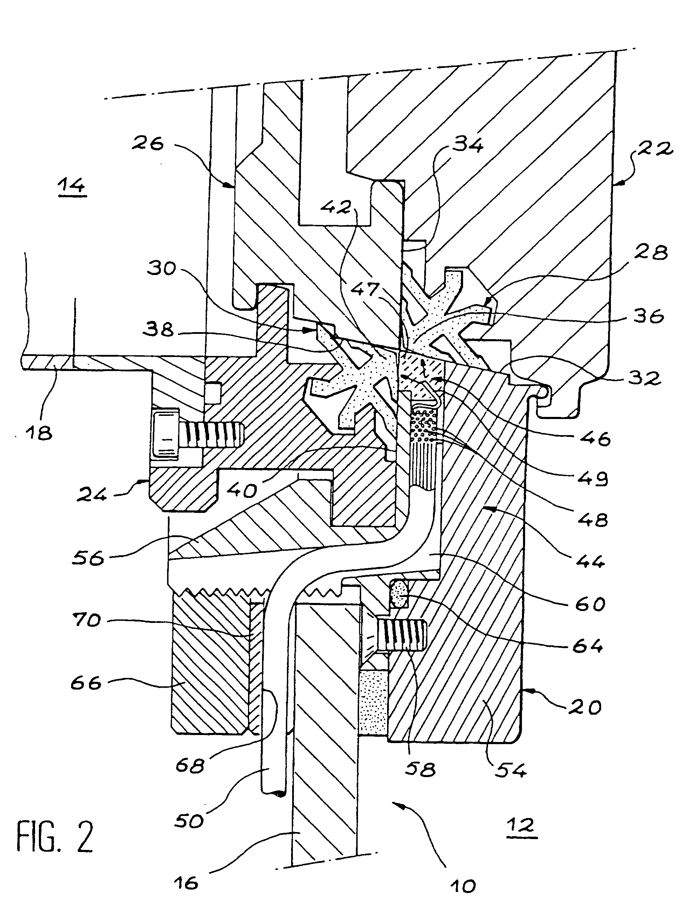

Comme l'illustre plus en détail la figure 2, le joint d'étanchéité annulaire 28 est monté sur la porte 22 et le joint d'étanchéité annulaire 30 est monté sur la bride 24.

De façon plus précise, le joint d'étanchéité annulaire 28 est monté sur la porte 22 de façon à pouvoir venir en appui étanche à la fois sur la surface périphérique intérieure 32 de la bride 20, lorsque la porte 22 est connectée à cette bride, et sur la face extérieure 34 de la porte 26, lorsque les portes 22 et 26 sont connectées l'une à l'autre. A cet effet, le joint d'étanchéité annulaire 28 présente une partie 36, en forme de V, qui vient se loger dans l'angle formé entre la surface 32 et la face 34 lorsque la porte 22 est connectée à la fois sur la bride 20 et sur la porte 26.

De façon comparable, le joint d'étanchéité annulaire 30 est monté sur la bride 24 de façon à pouvoir venir en appui étanche à la fois contre la surface périphérique extérieure 38 de la porte 26, lorsque celle-ci est connectée à la bride 24, et contre la face extérieure 40 de la bride 20, lorsque les brides 20 et 24 sont connectées l'une à l'autre. A cet effet, le joint d'étanchéité annulaire 30 comporte une partie 42, en forme de V, qui vient se loger dans l'angle formé entre la surface 38 et la face 40 lorsque la bride 24 est connectée à la fois à la porte 26 et à la bride 20.

Par conséquent, selon un agencement connu, les pointes des parties 36 et 42, en forme de V, des joints 28 et 30 se font face lorsque le dispositif de transfert étanche se trouve dans l'état illustré sur les figures 1 à 3, c'est-à-dire lorsque les brides 20 et 24 et les portes 22 et 26 sont connectées les unes aux autres. Le dispositif se trouve dans cet état lorsque les deux ensembles ont été raccordés par leurs brides 20 et 24, mais que les volumes stériles 12 et 14 n'ont pas encore été mise en communication l'un avec l'autre.

Conformément à l'invention, le dispositif de transfert étanche 10 est équipé de moyens de décontamination 44, par rayonnements ultraviolets, ultraviolets pulsés ou de lumière pulsés, des pointes des parties 36 et 42, en forme de V, des joints 28 et 38, et des régions immédiatement adjacentes à ces pointes. Ces moyens de décontamination 44 sont intégrés dans la bride 20.

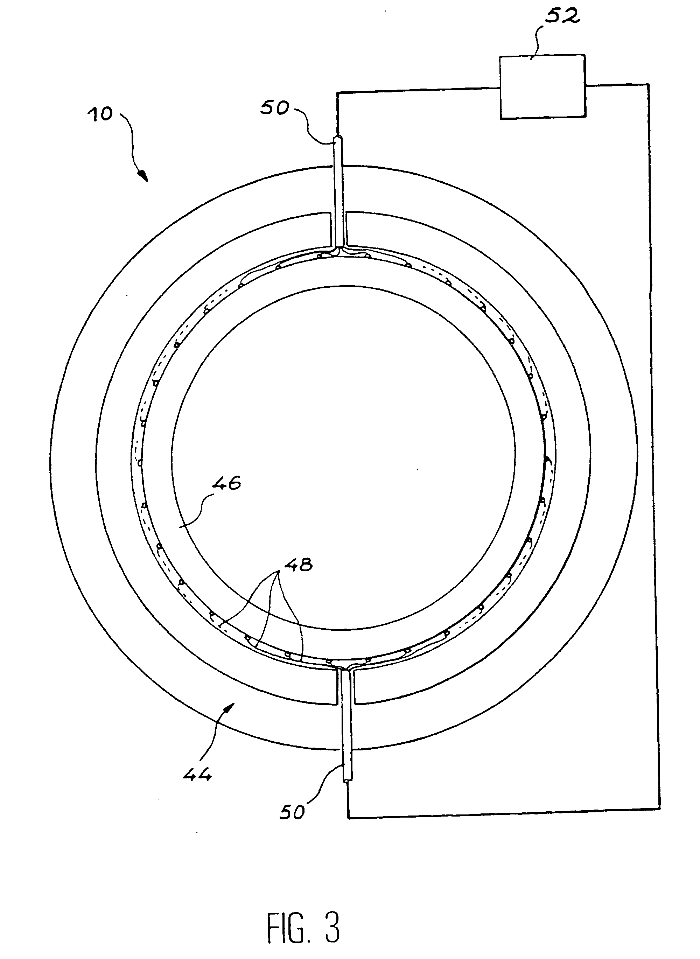

Une forme de réalisation préférée des moyens de décontamination 44 par rayonnements notamment ultraviolets, va à présent être décrite en détail en se référant notamment aux figures 2 et 3.

Ces moyens de décontamination 44 comprennent une bague 46, réalisée en un matériau apte à diffuser les rayonnements. Ce matériau peut notamment être du polyméthacrylate de méthyle (ou PMMA), du quartz, ou tout autre matériau approprié.

La bague 46 est intégrée à la bride 20, où elle est placée dans l'angle formé entre la surface 32 et la face 40. Plus précisément, la bague 46 présente en section une partie 47 en forme de V, sur laquelle sont formées les portions d'extrémité attenantes de la surface 32 et de la face 40. Cette partie 47 en forme de V de la bague 46 vient donc en contact avec la partie 36 en forme de V du joint 28 et avec la partie 42 en forme de V du joint 30 lorsque la porte 22 et la bride 24 sont connectées sur la bride 20, comme l'illustrent les figures 1 et 2.

Les moyens de décontamination 44 comprennent en outre des fibres optiques 48 dont des premières extrémités sont montés sur la bague 46, comme le montrent les figures 2 et 3. La nature des fibres optiques 48 est choisie pour permettre une transmission efficace des rayonnements. A cet effet, on utilise avantageusement des fibres optiques en polyméthacrylate de méthyle (ou PMMA).

Les premières extrémités des fibres optiques 48 sont reçues et collées dans des trous borgnes 49 formés dans la bague 46, de telle sorte que ces extrémités sont tournées vers la pointe de la partie 47 en forme de V de cette bague et écartés de cette pointe d'une distance donnée.

De façon plus précise, les trous borgnes 49 dans lesquels sont reçues les premières extrémités des fibres optiques 48 sont situés dans des plans régulièrement espacés passant par l'axe de la bague 46, ainsi que sur une surface tronconique, bissectrice de l'angle formé par la partie 47 en forme de V de cette bague. Par conséquent, les premières extrémités des fibres optiques 48 sont régulièrement réparties, selon un écartement constant, sur toute la circonférence de la bague 46.

A l'extérieur de la bague 46, les fibres optiques 48 sont regroupées pour former au moins un câble 50 qui se prolonge à l'extérieur de la bride 20 et à l'extérieur de l'isolateur délimitant le volume stérile 12. Dans la forme de réalisation préférée de l'invention illustrée notamment sur la figure 3, les fibres optiques 48 sont regroupées en deux câbles 50, qui pénètrent dans la bride 20 en deux emplacements diamétralement opposés de celle-ci.

Les extrémités opposées des fibres optiques 48 sont reliées à une source 52 de rayonnements notamment ultraviolets. Cette source est choisie de façon à permettre d'effectuer, de façon aussi rapide que possible (par exemple, en environ 3 mn), la décontamination des pointes des parties 36 et 42, en forme de V, des joints 28 et 30. Il peut s'agir indifféremment d'une source continue ou d'une source pulsée.

Lorsque la source de rayonnements ultraviolets 52 est mise en oeuvre, le rayonnement ultraviolet chemine individuellement par chacune des fibres optiques 48 jusqu'à la bague 46. Le rayonnement ultraviolet acheminé par chacune des fibres 48 jusqu'à la bague 46 diffuse dans la partie 47 en forme de V de celle-ci, au-delà de l'extrémité de chaque fibre, selon un cône de diffusion que l'on a illustré schématiquement sur la figure 3. A titre d'exemple nullement limitatif, l'angle d'ouverture de ce cône de diffusion peut être d'environ 60°.

La distance qui sépare l'extrémité de chacune des fibres optiques 48 de la pointe de la partie 47, en forme de V, de la bague 46 est déterminée, en fonction des caractéristiques de la source de rayonnements ultraviolets 52, afin que la puissance du rayonnement qui atteint les pointes des parties 36 et 42, en forme de V, des joints 28 et 30 soit suffisante pour garantir l'efficacité de la décontamination.

La distance séparant les unes des autres les extrémités de chacune des fibres 48 montées dans la bague 46 est ensuite déterminée afin que les pointes des parties 36 et 46 en forme de V des joints 28 et 30 soient balayées sur toute leur circonférence par les rayonnements ultraviolets, lorsque la source 52 est mise en oeuvre.

Cette détermination est faite en fonction de l'angle d'ouverture du cône de diffusion des rayonnements dans la bague 46 et en fonction de la distance entre les extrémités des fibres 48 et la pointe de la partie 47, en forme de V, de la bague.

Lorsque toutes ces conditions sont respectées, une décontamination efficace des pointes des parties 36 et 42, en forme de V, des joints 28 et 30 peut être obtenue rapidement, par exemple en environ 3 min. Cette décontamination est effectuée lorsque le dispositif de transfert étanche 10 se trouve dans l'état illustré sur les figures 1 et 2, c'est-à-dire lorsque les brides 20 et 24 sont connectées l'une à l'autre et lorsque les portes 22 et 26 sont encore connectées à ces brides.

Il est à noter qu'un système de sécurité (non représenté) peut être ajouté au dispositif, afin d'éviter que la double porte formée par les portes 22 et 26 ne puisse être ouverte avant que la décontamination des pointes des parties 36 et 42, en forme de V, des joints n'ait été effectuée à l'aide des moyens de décontamination 44.

Comme l'illustre notamment la figure 2, l'intégration des moyens de décontamination 44 dans la bride 20, lors du montage de celle-ci, peut être facilitée en lui donnant une structure particulière qui va à présent être décrite.

Selon l'agencement préconisé, la bride 20 comprend une première pièce 54 sur laquelle est formée la partie de la surface périphérique intérieure 32 qui n'appartient pas à la bague 46. La bague 46 peut notamment être collée sur cette première pièce 54, pour compléter la surface périphérique intérieure 32.

La bride 20 comporte en outre une deuxième pièce 56, qui vient s'encastrer et se centrer dans un embrèvement de la pièce 54. La pièce 56 comprend la partie de la face extérieure 40 qui n'est pas formée sur la bague 46. Elle est fixée sur la pièce 54 par des moyens d'assemblage tels que des vis dont l'une est illustrée en 58 sur la figure 3. Lorsque la pièce 56 est fixée à la pièce 54 par les vis 58, la bague 46 est bloquée entre les deux pièces et la face extérieure 49 est complète.

Comme on l'a représenté sur la figure 2, la pièce 56 comporte des passages 60 par lesquels cheminent chacun des câbles 50. Les passages 60 débouchent dans un évidement annulaire qui entoure la bague 46 et dans lequel circulent les parties des fibres optiques 48 situées entre les câbles 50 et les trous borgnes 49 usinés dans la bague 46. A leur extrémité opposée, les passages 60 débouchent à l'extérieur de l'isolateur

Un joint d'étanchéité torique 64 est interposé entre les pièces 64 et 66, dans leurs parties situées radialement vers l'extérieur par rapport aux passages 60, c'est-à-dire à l'opposé de la bague 46 par rapport à ces derniers. On évite ainsi tout risque de perte d'étanchéité du volume stérile 12.

La pièce 56 de la bride 20 comporte en outre des moyens classiques permettant de monter cette bride de façon étanche sur la paroi 16 de l'isolateur. Ces moyens comprennent essentiellement un écrou 66 vissé sur une partie extérieure filetée de la pièce 56. Pour éviter leur écrasement, les câbles 50 passent par des passages 68 usinés dans une rondelle 70, interposée entre l'écrou 66 et la paroi 16.

Le nombre des fibres optiques 48 des moyens de décontamination 44 est d'autant plus grand que le diamètre du dispositif de transfert étanche est important.

Par ailleurs, on comprendra aisément que l'invention s'applique quelle que soit la forme particulière donnée aux joints d'étanchéité annulaires 28 et 30 qui équipent le dispositif. De ce point de vue, la forme de ces joints illustrée sur la figure 2 ne doit en aucun cas être considérée comme limitative.

## Revendications

1. Dispositif de transfert étanche entre deux volumes stériles (12,14), incluant deux brides (20,24) aptes à être connectées l'une à l'autre, deux portes (22,26) aptes à être connectées l'une à l'autre ainsi qu'auxdites brides, et deux joints d'étanchéité annulaires (28, 30) montés respectivement sur une première (24) des brides et sur la porte (22) apte à être connectée à la deuxième bride (20), lesdits joints présentant en section des parties (36,42), en forme de V, dont les pointes se font face lorsque les portes et les brides sont connectées les unes aux autres, dans lequel des moyens de décontamination (44) des pointes des parties (36,42), en forme de V, des joints et des régions immédiatement adjacentes, sont intégrés dans la deuxième bride (20), **caractérisé par le fait que** les moyens de décontamination (44) utilisant des rayonnements ultraviolets, ultraviolets pulsés, ou de lumière pulsés, les moyens de décontamination (44) comprenant une bague (46) en un matériau apte à diffuser les rayonnements, ladite bague présentant en section une partie (47), en forme de V, apte à être en contact avec les parties (36,42), en forme de V, des joints (28,30), et des fibres optiques (48) dont des premières extrémités sont régulièrement réparties autour de ladite bague (46) et tournées vers la pointe de la partie (47), en forme de V, de celle-ci.

2. Dispositif selon la revendication 1, dans lequel les deuxièmes extrémités des fibres optiques (48) sont reliées à une source (52) de rayonnements.

3. Dispositif selon l'une quelconque des revendications 1 et 2, dans lequel, à l'extérieur de la bague (46), les fibres optiques (48) sont regroupées en au moins un câble (50).

4. Dispositif selon la revendication 3, dans lequel (48) les fibres optiques sont regroupées en deux câbles (50) qui pénètrent dans la deuxième bride (20) en des emplacements diamétralement opposés.

5. Dispositif selon l'une quelconque des revendications 3 et 4, dans lequel la deuxième bride (20) comprend deux pièces (54,56) reliées l'une à l'autre par des moyens d'assemblage (58) et entre lesquelles est montée ladite bague (46), le câble (50) cheminant dans un passage (60) formé dans une première (56) desdites pièces, tournée vers l'extérieur du volume stérile (12) correspondant, des moyens d'étanchéité (64) étant prévus entre lesdites pièces, à l'opposé de la bague (46) par rapport audit passage.

6. Dispositif selon l'une quelconque des revendications 1 à 5, dans lequel les premières extrémités des fibres optiques (48) sont logées dans des trous borgnes (49) formés dans la bague (46), ces trous étant situés dans des plans régulièrement espacés passant par l'axe de la bague (46) et sur une surface tronconique, bissectrice de la partie (47), en forme de V, de la bague.

7. Dispositif selon l'une quelconque des revendications 1 à 6, dans lequel les premières extrémités des fibres optiques (48) sont séparées les unes des autres d'une distance telle que la pointe de la partie (47), en forme de V, de la bague (46) est apte à être balayée, sur toute la circonférence de celle-ci, par les rayonnements.

## Patentansprüche

1. Dichte Transfervorrichtung zwischen zwei sterilen Volumen (12, 14), zwei Flansche (20, 24), die miteinander verbunden werden können, zwei Türen (22, 26), die miteinander und mit den genannten Flanschen verbunden werden können, und zwei mit dem zweiten Flansch (20) verbundene ringförmige Dichtungen (28, 30) umfassend, die jeweils auf einen ersten (24) der Flansche und auf die mit dem zweiten Flansch (20) verbundene Tür (22) montiert sind, wobei die genannten Dichtungen im Querschnitt V-förmige Teile (36, 42) aufweisen, deren Spitzen sich gegenüberstehen, wenn die Türen und die Flansche miteinander verbunden sind, bei der Dekontaminationseinrichtungen (44) der Spitzen der V-förmigen Teile (36, 42) der Dichtungen und der unmittelbar benachbarten Bereiche in den zweiten Flansch (20) integriert sind,
**dadurch gekennzeichnet, dass** die Dekontaminationseinrichtungen (44) UV-Strahlung, gepulste UV-Strahlen oder gepulstes Licht benutzen, wobei die Dekontaminationseinrichtungen (44) einen Ring (46) aus einem Material umfassen, das fähig ist, die Strahlung zu zerstreuen und dieser Ring im Querschnitt einen V-förmigen Teil (47) zur Herstellung des Kontakts mit den V-förmigen Teilen (36, 42) der Dichtungen (28, 30) aufweist, und optische Fasern (48) umfassen, deren erste Enden gleichmäßig über den gesamten Ring (46) verteilt und jeweils auf die Spitze von dessen V-förmigem Teil (47) ausgerichtet sind.

2. Vorrichtung nach Anspruch 1, bei der die zweiten Enden der optischen Fasern (48) mit einer Strahlungsquelle (52) verbunden sind.

3. Vorrichtung nach einem der Ansprüche 1 und 2, bei der die optischen Fasern (48) außerhalb des Rings (46) zu wenigstens einem Kabel (50) zusammengefasst sind.

4. Vorrichtung nach Anspruch 3, bei der die optischen Fasern (48) zu zwei Kabeln (50) zusammengefasst sind, die an diametral entgegengesetzten Stellen in den zweiten Flansch (20) eindringen.

5. Vorrichtung nach einem der Ansprüche 3 und 4, bei welcher der zweite Flansch (20) zwei Teile (54, 56) umfasst, die durch Montagemittel (58) miteinander verbunden sind und zwischen denen sich der genannte Ring (46) befindet, wobei das Kabel (50) in einem der Außenseite des entsprechenden sterilen Volumens (12) zugewandten ersten (56) der genannten Teile eine Passage (60) durchläuft und Abdichtungseinrichtungen (64) zwischen den genannten Teilen vorgesehen sind, dem Ring (46) entgegengesetzt in Bezug auf die genannte Passage.

6. Vorrichtung nach einem der Ansprüche 1 bis 5, bei der die ersten Enden der optischen Fasern (48) in Grundlöchem (49) sitzen, ausgebildet in dem Ring (46), wobei diese Löcher sich in gleichmäßig beabstandeten, durch die Achse des Rings (46) verlaufenden Ebenen und in einer kegelstumpfförmigen, den Winkel des V-förmigen Teils (47) des Rings halbierenden Fläche befinden.

7. Vorrichtung nach einem der Ansprüche 1 bis 6, bei der die ersten Enden der optischen Fasern (48) durch einen solchen Abstand voneinander getrennt sind, dass die Spitze des V-förmigen Teils (47) des Rings (46) über ihren gesamten Umfang bestrahlt wird.

## Claims

1. Device for the tight transfer between two sterile volumes (12, 14), including two flanges (20, 24) connectable to one another, two ports (22, 26) connectable to one another and to said flanges, and two annular gaskets (28, 30) respectively fitted to a first of the flanges (24) and to the port (22) connectable to the second flange (20), said gaskets having in cross-section V-shaped portions (36, 42), whose points face one another when the ports and flanges are connected to one another, said decontamination means (44) of the points of the v-shaped portions (36, 42) of the gaskets and immediately adjacent regions are integrated into the second flange (20), **characterized in that** the decontamination means (44) use ultraviolet, pulsed ultraviolet or pulsed light rays, the decontamination means (44) comprising a collar (46) made from a material able to diffuse the rays, said collar having in cross-section a V-shaped portion (47) which can be in contact with the V-shaped portions (36, 42) of the gaskets (28, 30), and optical fibres (48), whereof first ends are regularly distributed around said collar (46) and turned towards the point of the V-shaped portion (47) thereof.

2. Device according to claim 1, wherein the second ends of the optical fibres (48) are connected to a radiation source (52).

3. Device according to either of the claims 1 and 2, wherein, outside the collar (46), the optical fibres (48) are combined into at least one cable (50).

4. Device according to claim 3, wherein the optical fibres (48) are combined into two cables (50), which penetrate the second flange (20) at diametrically opposite locations.

5. Device according to either of the claims 3 and 4, wherein the second flange (20) comprises two parts (54, 56) connected to one another by assembly means (58) and between which is installed said collar (46), the cable (50) travelling in a passage (60) formed in a first (56) of said parts, turned towards the outside of the corresponding sterile volume (12), sealing means (64) being provided between said parts, opposite the collar (46) with respect to said passage.

6. Device according to any one of the claims 1 to 5, wherein the first ends of the optical fibres (48) are housed in blind holes (49) formed in the collar (46), said holes being located in regularly spaced planes passing through the axis of the collar (46) and on a truncated cone-shaped surface, bisecting the V-shaped portion (47) of the collar.

7. Device according to any one of the claims 1 to 6, wherein the first ends of the optical fibres (48) are separated from one another by a distance such that the point of the V-shaped portion (47) of the collar (46) can be swept by the radiation over the entire circumference thereof.
